# EUROPEAN PATENT APPLICATION

(11) **EP 2 466 536 A1**
(43) Date of publication of application: **20.06.2012**
(21) Application number: 11250913.8
(22) Date of filing: 28.11.2011
(51) Int. Cl.: G06Q 10/02, G06Q 10/06

(54) **Attendee tranportation**

(30) Priority: 26.11.2010 US 954846
(71) Applicant: CWT Global B.V., 1112 XS Diemen (NL)
(72) Inventor: Simon, Patrice Michel, Minneapolis, Minnesota 55416 (US); El kaim, William, Sceaux 92330 (FR)
(74) Representative: Beresford, Keith Denis Lewis

(57) **Abstract**

Systems and methods for optimizing travel criteria for a meeting are disclosed. A set of attendee originating cities may be specified along with the number of attendees from each attendee location. The system then determines various travel scenarios for each destination location in a database. An ordered list of scenarios is presented. Ordering of the list may be determined by various criteria such as the travel cost of the scenario, total mileage for travel to the destination location in the scenario, or total CO₂ emissions for the scenario. Additionally, the costs may include telepresence costs associated with using a telepresence facility for the meeting. A predetermined criterion of the travel scenarios is compared and a travel scenario is selected on the basis of that comparison. Attendees are then transported from their respective attendee locations to the destination location in accordance with the selected travel scenario.

## Description

### FIELD

The present invention relates generally to methods and apparatus for transporting attendees to a meeting, and is particularly concerned with optimization systems and more particularly to determining optimal meeting locations and transporting attendees from their locations of origin to the meeting location, using any of a variety of factors to determine the optimum location, these factors including but not being limited to environmental considerations, travel costs, travel time, trip quality, safety and telepresence costs.

### BACKGROUND

Companies spend considerable amounts of money on travel expenses for their employees, clients and customers. It is quite common for businesses to have locations that are spread across a wide geographic area, and in fact many businesses operate from multiple locations around the world. Often, there is a need for various employees of a business to attend meetings or conferences, and due to the fact that the attendees may be based at various locations, travel costs must be incurred. Travel costs for the employees to attend the meeting can be substantial, particularly when the travel distance is great or when more than a few employees must travel to the meeting.

Current meeting estimation tools, such as those developed by GetThere Direct Meetings, MeetingsLogic, Trondent, and StarCite, can provide a high-level, total cost estimate. However, these tools require that the potential meeting locations be selected in advance by a person designated as the meeting planner before the tool can provide results. Further, these tools only consider current travel costs, they do not consider past travel cost. Additionally, these tools consider only the total monetary cost of the meeting, and do not consider alternative transaction costs, such as total mileage or CO₂ emissions.

To help manage these additional transaction costs, clients have turned to technology alternatives to travel such as Telepresence. Telepresence refers to a set of technologies which allow a person to feel as if they were present, to give the appearance that they were present, or to have an effect, at a location other than their true location. In addition to making use of publically available Telepresence rooms, many corporations have invested, or are currently investing, in providing private telepresence rooms. However, travel managers and meeting planners currently lack an objective answer to whether travel is required, and if so, what is the optimum location, based on the client's preferred measure of transaction costs: total cost, total travel time, total mileage traveled, or CO₂ emissions.

The present invention provides apparatus and methods for selecting a meeting location and transporting attendees to the meeting location from their respective locations of origin at least in part by means of motorised vehicles while optimising travel criteria, as set out in the appended claims.

In the present specification, "motorised vehicles" is intended to include jet or propeller-driven aircraft, seagoing vessels, and land vehicles such as automobiles and trains. Such vehicles may be driven by any suitable means, such as by internal or external combustion engines fuelled by petrol, diesel, LPG, coal or other fuel, or may be driven by electric motors powered by batteries, by fuel cells or by static or mobile electricity generators.

### BRIEF DESCRIPTION OF THE FIGURES

Embodiments of the invention are illustrated by way of example and not limitation in the Figures of the accompanying drawings, in which:

**Figure 1** is a block diagram of system architecture according to embodiments of the invention

**Figure 2** is a flow chart illustrating methods for optimizing meeting locations according to embodiments of the invention.

**Figures 3A** **and** **3B** are graphical illustrations of travel scenarios.

**Figures 4A** **― 4I** are example screen images used in various embodiments of the invention.

Figure 5 is a block diagram of an example computer system capable of incorporating various embodiments of the invention.

### DESCRIPTION OF THE EMBODIMENTS

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. Furthermore, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

A number of figures show block diagrams of systems and apparatus of embodiments of the invention. A number of figures show flow diagrams illustrating systems and apparatus for such embodiments. The operations of the flow diagrams will be described with references to the systems/apparatuses shown in the block diagrams. However, it should be understood that the operations of the flow diagrams could be performed by embodiments of systems and apparatus other than those discussed with reference to the block diagrams, and embodiments discussed with reference to the systems/apparatus could perform operations different from those discussed with reference to the flow diagrams.

### Overview

The various embodiments of the invention provide the ability for a meeting planner to enter the cities of origin for meeting attendees, as well as other search parameters, so that the apparatus may determine a number of meeting locations, including public or private telepresence rooms, prioritized by their choice of total meeting costs, total CO₂ emissions, total miles traveled, or total travel time. A selection of one of the meeting locations may then be made either by the meeting planner or by the apparatus itself on the basis of predetermined criteria. The attendees may then be transported to the meeting location, in accordance with travel arrangements made on the basis of the selected meeting location.

The result set may include all possible destinations within the database reachable from the cities of origin for the attendees and thus the potential meeting locations are not restricted by any data input by the meeting planner. Further, a telepresence combination may be considered and appropriately included in the result set. This means that telepresence results will include travel when meeting participants are not based immediately near a telepresence location.

The embodiments of the invention utilize transportation fare data, hotel, and telepresence data to provide a prioritized list of meeting locations, based on meeting planner inputs. Meeting planners provide cities of origin for their attendees and may also provide classes of service that are permitted. Optional inputs include such parameters as preferred destination, and maximum allowed connections. The system then uses the planner-provided inputs to return a list of results, prioritized by total expense, total mileage traveled, CO₂ emissions, or total travel time.

Telepresence options can be included in, and appropriately ordered within the results set. A meeting including a telepresence facility can gather multiple rooms at the same time and for the calculation groups of travellers can be split into several different rooms.

### Example Operating Environment

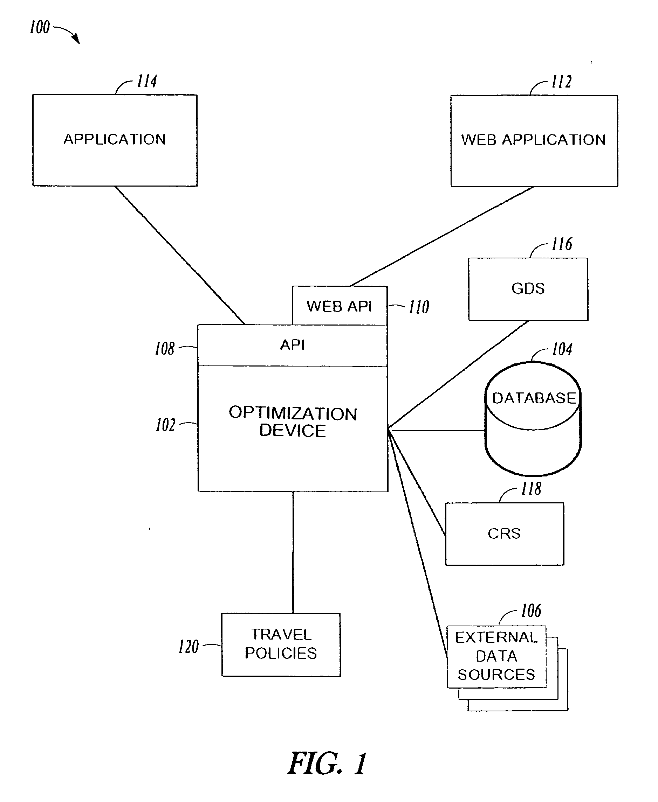

Figure 1 is a block diagram illustrating an architecture for a system 100 according to embodiments of the invention. In some of the embodiments described herein, system 100 includes optimization device 102, database 104 and external data sources 106. Further, system 100 may include or interface with web application 112, application 114 or GDS (Global Distribution System) 116. The systems may be communicably coupled via private networks or via a public network such as the Internet.

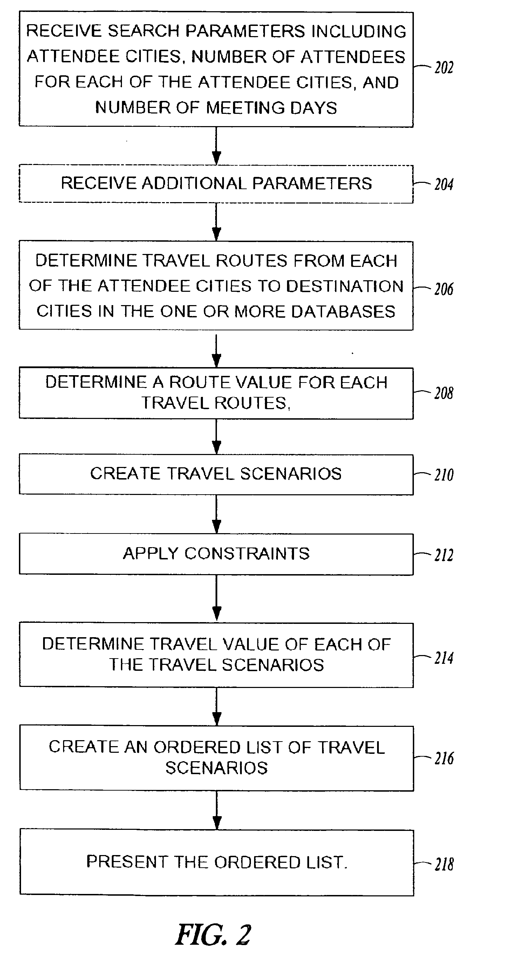

Optimization device 102 comprises one or more modules that provide meeting location optimization services to client applications. As used herein, a module is any grouping of software, hardware, or firmware routines that perform an indicated task. In general, the optimization device receives parameters such as cities of origin for meeting attendees and uses the parameters to return a list of results, prioritized by criteria such as total expense, total mileage traveled, CO₂ emissions, or total travel time. Further details on the operation of optimization device 102 are provided below with reference to Figure 2.

Database system 104 maintains a database of travel information regarding various forms and aspects of travel. Although shown as one database, database 104 may be more than one database and may be distributed across a number of database systems. Database 104 may include any combination of one or more of the following: air travel data, rail travel data, hotel data, car data, or telepresence data.

Air travel data may include travel data for a travel segment where a segment may include combinations of one or more of the following :
● Origin - Origination city (IATA city code in some of the embodiments described herein)
● Destination - Destination City (IATA city code in some of the embodiments described herein)
● Air class - Class of service (first, business, premium, economy etc.)
● Round Trip Travel Cost - Travel cost for a round trip starting at the origin city to the destination city. May be a statistical measure (e.g., mean, median, mode etc.) of historical travel cost data.
● Round Trip Travel Time - Travel time for a round trip between origin and destination
● Round Trip Travel Mileage - Number of miles for a round trip between origin and destination
● Round Trip Travel CO₂ Emission - CO₂ emitted for a round trip between origin and destination.

Rail travel data may include combinations of one or more of the following:
● Origin - Origination city (IATA city code in some of the embodiments described herein)
● Destination - Destination City (IATA city code in some of the embodiments described herein)
● Rail class - Class of service (first, business, premium, economy etc.)
● Round Trip Travel Cost - Travel cost for a round trip starting at the origin city to the destination city. May be a statistical measure (e.g., mean, median, mode etc.) of historical travel cost data.
● Round Trip Travel Time - Travel time for a round trip between origin and destination
● Round Trip Travel Mileage - Number of miles for a round trip between origin and destination
● Round Trip Travel CO₂ Emission - CO₂ emitted for a round trip between origin and destination.

Hotel data may include combinations of one or more of the following:
● Hotel location - Identifies city for hotel stay (IATA city code + metro area e.g., "NYC-Manhattan" in some of the embodiments described herein)
● Average cost per night - Average cost for one night's stay in a hotel in the location
● Classification - Star rating (e.g., one star, two star, three star etc.)
● Hotel Rating - Traveller-supplied ratings of a hotel. May be obtained from internal data or 3^{rd} party data (e.g., TRIPADVISOR^{®})
● Additional Costs - Costs for meeting rooms, parking etc.
● CO₂ Emission - CO₂ emission associated with the operation of hotels.

Car data may include combinations of one or more of the following:
● Origin - Origination city (IATA city code in some of the embodiments described herein)
● Destination - Destination City (IATA city code in some of the embodiments described herein)
● Car class - Class of service (compact, economy, standard, full, etc.)
● Round Trip Travel Cost - Travel cost for a round trip starting at the origin city to the destination city. May be a statistical measure (e.g., mean, median, mode etc.) of historical travel cost data. May include rental cost and fuel costs.
● Round Trip Travel Time - Travel time for a round trip between origin and destination
● Round Trip Travel Mileage - Number of miles for a round trip between origin and destination
● Round Trip Travel CO₂ Emission - CO₂ emitted for a round trip between origin and destination.

Telepresence data may include combinations of one or more of the following:
● Meeting room location - City in which meeting room is located (IATA city code in some of the embodiments described herein)
● Telepresence provider name - Name of entity providing the telepresence facilities
● Max capacity - Sum of maximum participants in all rooms in a given location for the provider
● Cost per hour - cost for the room or rooms for the provider in the location. May be a statistical measure (mean, median, mode etc.) of historical cost data.
● IsPrivateRoom - Indicates if the room is owned by the business requesting the meeting, e.g. a private room, or if the telepresence room or rooms are available for hire by the public.

A historical record of the above-described data may be stored in database 104. For example, data may be obtained at certain intervals and stored in the database. In some of the embodiments described herein, twenty months (five quarters) of data is kept in the database, with the data being collected at monthly intervals. Those of skill in the art having the benefit of the disclosure will appreciate that other intervals may be chosen.

The fields indicated as being averages (e.g., the round trip travel costs in the air, train and car data) may be calculated using the historical data. For example, in some of the embodiments described herein, the average round trip cost may be determined using the previously collected six months' data. Alternatively, the average cost may be determined using the data collected in the same quarter of the previous year as the quarter of the planned meeting start date provided by the user.

Application 114 may be any application that uses the optimization device. The application may provide a user interface to submit search request parameters and to receive search results from optimization device 102. Alternatively, application 114 may programmatically generate search request parameters for submission to optimization device 102.

API (Application Program Interface) 108 provides a software interface for applications such as application 114 to submit search requests and parameters to optimization device 102 and to receive travel scenarios produced by optimization device 102 in response to the search requests.

Web application 112 provides World Wide Web based interface for submitting search request parameters to optimization device 102 and to receive ordered lists of travel scenarios produced by optimization device 102 in response to the search request.

Web API 110 provides a software interface for receiving request parameters over the a communications network such as the World Wide Web and for submitting the request parameters to optimization device 102. In some of the embodiments described herein, Web API 110 adapts or translates requests received via the Web application 112 into requests compatible with API 108. In alterative embodiments, Web API 110 may submit requests directly to optimization device 102.

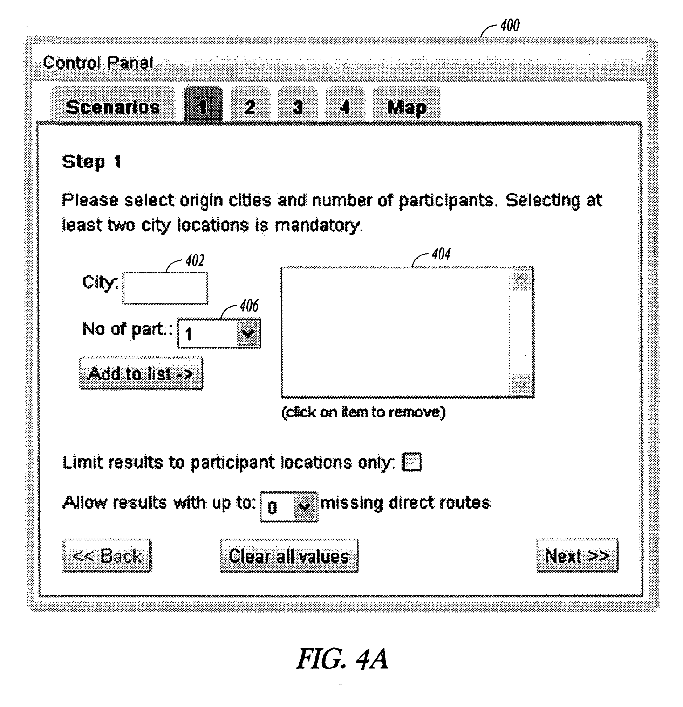

Examples of a user interface that may be provided by application 114 or Web application 112 are provided below with reference to Figures 4A - 4I.

In some of the embodiments described herein, optimization device 102 may obtain data from external data sources 106. Examples of such data include OAG (Official Airline Guide) data and CO₂ emissions data.

In some of the embodiments described herein, optimization device 102 may obtain data from GDS 116. GDS 116 is a travel services reservation system, also referred to as a computerized reservation system. GDS 116 maintains inventory of available travel services and tracks bookings and reservations against the available inventory. Examples of such systems include Sabre, Galileo (also known as Apollo), Amadeus, and Worldspan.

Additionally, in some of the embodiments described herein, optimization device 102 may obtain data from a central reservation system (CRS) 118. CRS 118 may be any type of travel reservation system such as a hotel reservation system, automobile rental reservation system etc.

Further, optimization device 102 may utilize travel policies 120. Travel policies 120 comprises data that determines the travel policies for companies using the optimization device 102. Examples of such policies include the class of travel permitted. The class of travel may vary depending on the employment status of the traveller (e.g., company executive, senior management, staff etc.), the duration of travel (e.g., longer trips may permit a higher class of travel) or other factors. Travel policies may indicate preferred providers for travel services.

The components and modules of system 100 described above represent those components and modules of an example embodiment. It should be noted that the invention may be implemented using more or fewer components or modules, and that the functionality may be distributed in different components.

Further, the components or modules may execute in whole or in part on server computers, personal computers, mainframe computers, mobile (cellular) phones, personal digital assistants, set-top boxes, web appliances or any other machine capable of executing a set of instructions that specify a set of actions to be taken by the machine.

### Example Operations

Figure 2 is a flow chart illustrating aspects of a method 200 for optimizing transport of attendees to a meeting using any of a variety of travel optimization criteria, including travel costs, emissions, mileage, travel quality etc. The methods to be performed may utilize computer programs or modules made up of computer-executable instructions. Describing the methods by reference to a flowchart enables one of ordinary skill in the art to develop such programs including instructions to carry out the method on suitable processors (the processor or processors of the computer executing the instructions from computer-readable media). The method illustrated in Figure 2 includes actions that may be taken by an operating environment such as system 100 executing any embodiment of the invention.

The method begins at block 202 with receiving search parameters for a request for meeting location travel scenarios. The search parameters include origin cities for a group of attendees. Further, the search parameters include the number of attendees for each origin city in the request. Other search parameters are possible. For example, the permitted classes of travel may be input, either for the meeting as a whole or for certain attendee cities. The number of days the meeting is to last may be supplied as a search parameter. The number of days may be derived from meeting start dates and end dates that may be supplied as an input parameter. Additionally, an indicator of whether or not telepresence facilities may be used may be an input parameter.

In some of the embodiments described herein, the optimization device receives additional parameters at block 204. Such parameters may include the travel value that is to be optimized (e.g., cost, emissions, mileage, duration, travel quality etc.). Further, the additional parameters may include the number of telepresence hours that may be required for a meeting. The additional parameters may include one or more destination cities that are to be included in the ordered list (regardless of their position in the list) for comparison purposes.

At block 206, the optimization device determines a travel route from each attendee city to each destination city in the database. It should be noted that the set of destination cities may be determined by the optimization device and will typically include all destinations in the database. This provides a technical advantage over previous solutions in that the optimization device can produce destinations that a meeting planner may not have considered. The travel route includes one or more travel segments to the destination city. For example, a travel route that comprises a direct flight may include only one segment. However, if there is no direct flight available, the optimizing service may create travel routes comprising two or more travel segments leading from the attendee city to the destination city. The least expensive route between the origin and destination city is then selected as the travel route. As an example, assume there is no data between Paris and Madison, Wisconsin, USA. In this case, the optimization device will find all cities commonly shared between Paris and Madison and will minimize the travel costs. The result may be the sum of the average fare for Paris-Minneapolis + Minneapolis-Madison.

The maximum number of segments that may be used for a travel route may be specified as an input parameter, a user preference, or a configuration parameter. A travel segment may be an air, train or car travel segment.

At block 208, the optimization device determines a route value for each travel route. The route value is determined by the criteria that are to be optimized in the scenarios. For example, if cost is to be optimized, then the route value will be a travel cost for the route. Alternatively, if emissions are to be optimized (e.g., CO₂ emissions), then the route value will be a value representing the emissions for the route. Other route values include mileage, duration, travel quality, travel safety etc. The route value for a route will include the travel value for each travel segment in the route multiplied by the number of attendees assigned to the route.

At block 210, the system applies constraints to the travel routes. The constraints may involve filtering the routes in accordance with a travel policy or with input parameters. For example, a travel policy may dictate that for safety reasons, certain countries or destinations are to be avoided. This typically involves filtering destinations or stops in countries or cities that are experiencing war or governmental instability. As a further example, a constraint may indicate that any individual flight may only carry a maximum number of company employees. Additionally, the constraints may involve filtering the routes to include classes of travel that are permitted and to exclude those that are not permitted. Further, the constraints may indicate that rail travel is to be used if the duration of travel would be less than a particular amount of time. A travel policy may allow a class upgrade if a trip is to last more than a particular amount of time. Further, a travel policy may indicate that a group fare is to be considered instead of or in addition to individual fares. Additionally, constraints may be applied to indicate that advance purchase fares are to be considered in costs, and the timing of the advance purchase (e.g., less than 7 days, 7-14 days, over 14 days etc.)

It should be noted that the constraints may be applied anywhere in the method. For example, the filtering of destinations may take place prior to creating the routes such that a route is not created if it cannot satisfy a constraint. Constraints may also be applied after travel scenarios are created.

At block 212, the system creates travel scenarios for each destination city. A travel scenario includes the destination city and the travel routes to the destination city from the attendee cities.

At block 214 the system determines a total value for each of the travel scenarios. The total value will include the route values for each of the routes in the travel scenario. Additionally, the total value may include the hotel values (cost, emissions values etc.) for the destination city multiplied by the number of nights required (supplied as an input parameter) and the number of attendees requiring a hotel stay.

At block 216, the optimization device creates an ordered list of travel scenarios. The ordered list may be sorted by the total value for the travel scenario. Thus if the criterion is cost, the list may be sorted by the total cost for the scenario. The ordered list may be sorted according to any criterion desired by the user that can be calculated using data in the database, such as the total mileage for the routes in the travel scenario or the total CO₂ emission for the scenario. Because the number of travel scenarios may be quite large, some of the embodiments described herein of the invention limit the number of travel scenarios in the ordered list to a predetermined number (e.g., 100). Alternatively, the number of travel scenarios in the list may be supplied (e.g., at block 204) by a user as an input parameter for the search.

At block 218, the optimized travel scenarios are presented. The presentation of the optimized travel scenarios may comprise displaying the ordered list of travel scenarios to a user via a screen of a web application or other application interfacing with the optimization device. In alternative embodiments, the optimized travel scenarios may be provided in a data file such as a spreadsheet or stored in a database. In further alternative embodiments, presenting the optimized travel scenarios may include transmitting the travel scenarios to an application. The application may then use the travel scenarios to present the scenarios to a user, or to validate a workflow. Further, the application may consolidate the travel scenario with live data obtained from a GDS or CRS. The live data may be used to further optimize the travel scenarios for a particular date for the meeting.

The apparatus may include means for comparing the respective total values of the said one or more travel scenarios, and selecting one of the travel scenarios on the basis of that comparison. The comparison may be carried out on the basis of a criterion selected by the user that can be calculated using data in the database, such as the total mileage for the routes in the travel scenario or the total CO₂ emission for the scenario.

Travel arrangements such as airline or train reservations may be made in accordance with the selected travel scenario, and the attendees transported to the meeting location in accordance with the selected travel scenario. The apparatus may include means for communicating with external booking agencies over a communications network in order to make the necessary reservations and ticket purchases required to implement the selected travel scenario. The attendees may then be transported to the meeting location in accordance with the travel reservations made to implement the selected travel scenario.

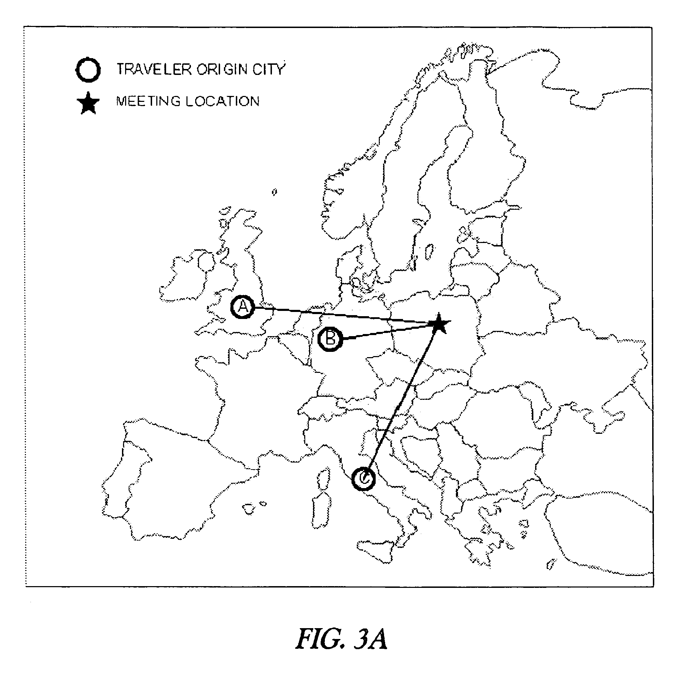

The method above has been described without reference to telepresence facilities. Thus in the embodiments described above, each travel scenario would include one destination location, possibly a city, with the attendees traveling to the same destination location. Figure 3A illustrates this concept. Figure 3A is a graphical illustration of a travel scenario in which travellers in cities A, B and C all travel to a single destination location for a meeting.

However, embodiments of the invention provide the ability to include telepresence capability in determining the optimized travel scenarios. As noted above, a telepresence facility provides the ability to factor telepresence capability in when determining a travel scenario cost. In this embodiment, some of the attendees may be assigned to a destination city having the least expensive telepresence cost. The telepresence cost includes the cost for renting the telepresence facility and the travel costs for travel to the city having the telepresence facility. It should be noted that in some cases, the travel costs will be zero because the telepresence facility may be located in the same city as one or more of the meeting attendees. Further, in some cases, the telepresence facility may be privately owned by the travel client, thus the cost to rent the facility may be zero. The travel values for scenarios including a city having a telepresence facility may be calculated as described above in Figure 2.

Thus when use of telepresence facilities are allowed for a meeting, there may be multiple destination cities in a travel scenario, one for each telepresence facility included in the travel scenario. The number of telepresence facilities that may be included in a scenario may be limited to a predetermined number. This is desirable because it is possible that the use of too many telepresence facilities may be beyond the technical or resource capabilities of a telepresence facility. For example, there may be a limit of four telepresence facilities in a travel scenario. The limit may be system imposed, configurable, or provided by a user.

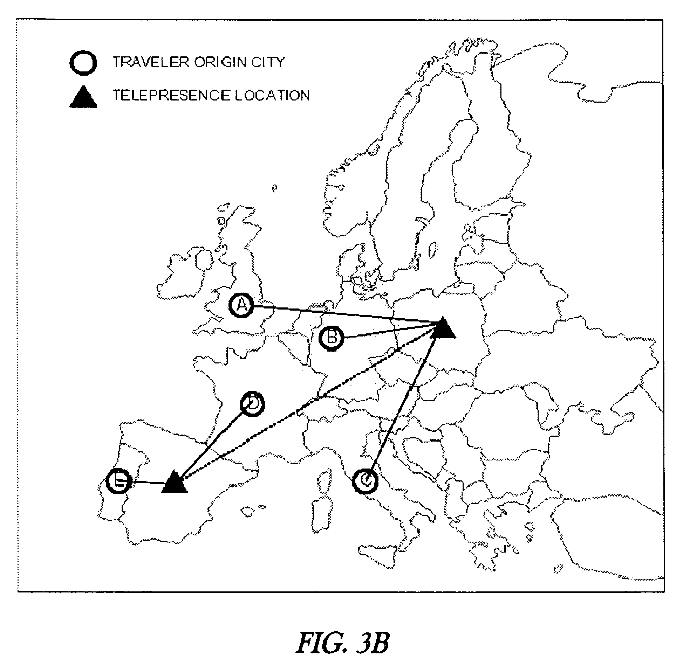

Figure 3B is a graphical example of a travel scenario in which two telepresence facilities are used. In this case, attendees from cities A, B and C travel to a city having a first telepresence facility while attendees from cities D and E travel to a city having a second telepresence facility.

Figures 4A-4I are example screen images of various user interfaces that may be used during the execution of the methods described above in Figure 2. The example screen images are representative of particular embodiments, other embodiments may use different interfaces. The inventive subject matter is not limited to that represented in Figures 4A - 4I.

Figure 4A illustrates an example user interface screen 400 for inputting a request for meeting location travel scenarios. Screen 400 includes a city selector field 402, an attendee city list field 404, and a number of attendees field 406.

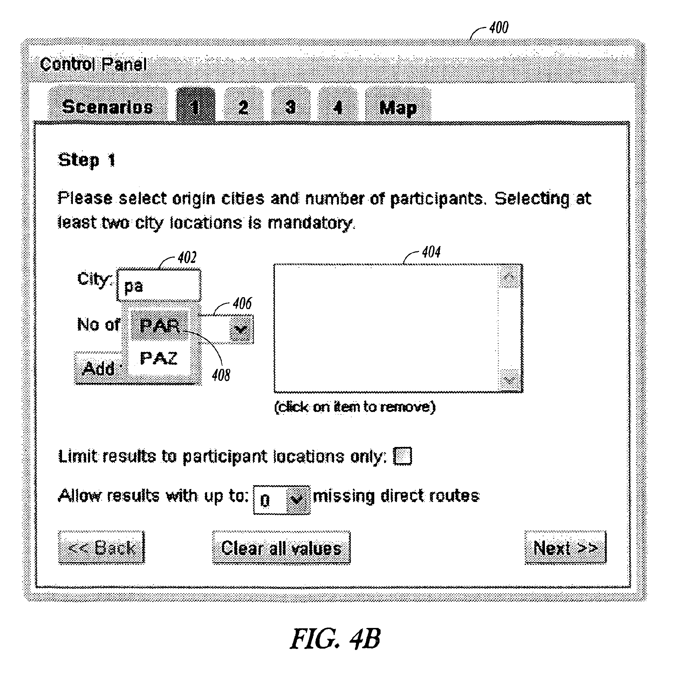

Figure 4B illustrates the example user interface screen 400 in which a user has started to enter text into city selector field 402 that is to be used to identify an origin city. In some of the embodiments described herein, a drop down box 408 appears containing a list of city codes that match the text partially entered into city selector field 402.

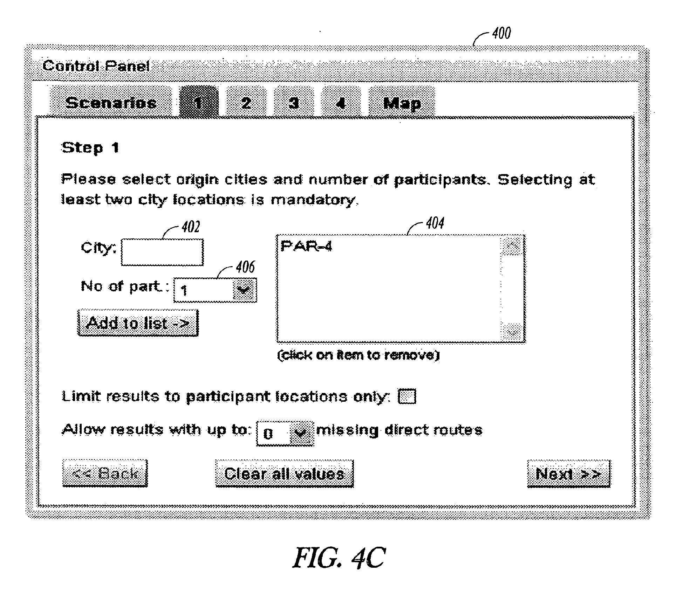

Figure 4C illustrates the example user interface screen 400 after a user has selected a city and number of attendees from that city to add to the attendee city list field 404. Specifically, user interface screen 400 has been updated by the user to indicate that four attendees will originate from the city in attendee city list field 404.

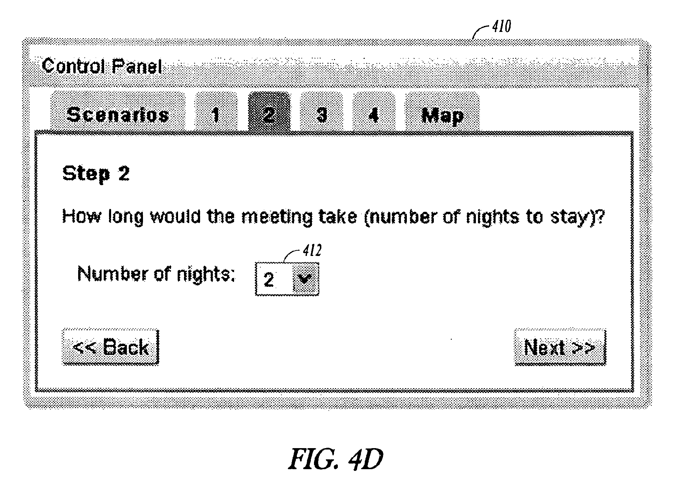

Figure 4D illustrates an example user interface screen 410 that includes a number of nights field 412 allowing input of the number of nights each attendee will need to stay in a hotel based on the expected length of the meeting or event. As noted above, this field can be used to determine if a hotel stay is required and the number of nights that a hotel will be required. Those of skill in the art having the benefit of the disclosure will appreciate that this field could instead allow input of the length of the meeting in days or other units of time.

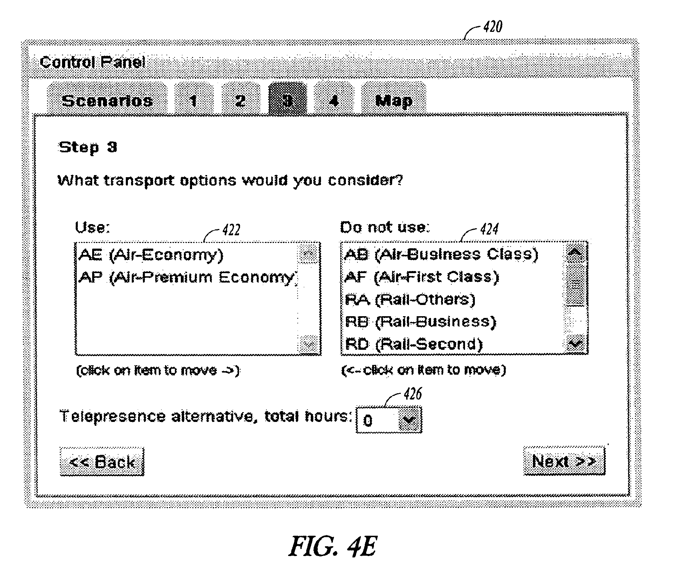

Figure 4E illustrates an example user interface screen 420 that includes permitted travel options field 422, prohibited travel options field 424, and telepresence field 426. In the example illustrated, the permitted travel options 422 and prohibited travel options 424 include classes of service that are either permitted or prohibited. Those of skill in the art having the benefit of the disclosure will appreciate that other travel options besides class of service may be used.

Telepresence field 426, if non-zero, indicates that telepresence facilities may be included in a travel scenario, and further indicates the number of hours the telepresence facility would be required.

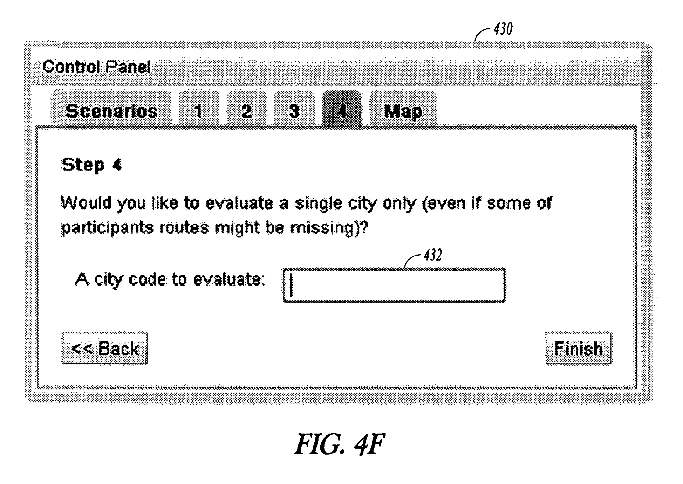

Figure 4F illustrates an example user interface screen 430 having a city code field 432. City code field 432 may be used to evaluate a single city for a travel scenario, or to force inclusion of the city into the list of travel scenarios.

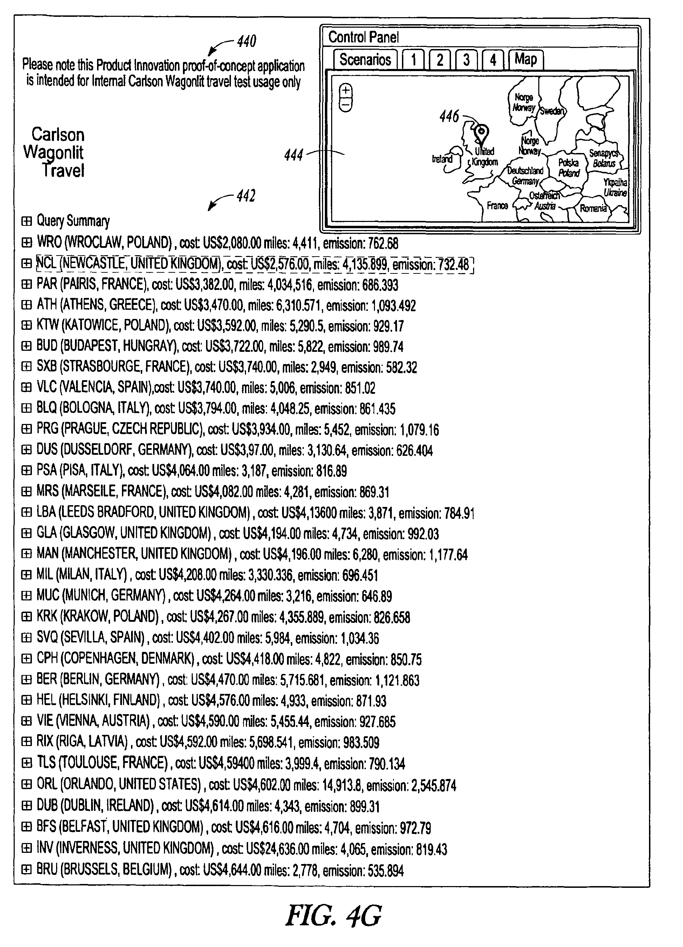

Figure 4G illustrates an example user interface screen 440 that presents an ordered list 442 of travel scenarios. In some of the embodiments described herein, the user interface screen includes a map 444 that indicates a selected city 446 on the map. As illustrated in Figure 4G, each scenario in the list includes total scenario values such as the total cost of the scenario, a mileage value for the scenario, and an emission value for the scenario.

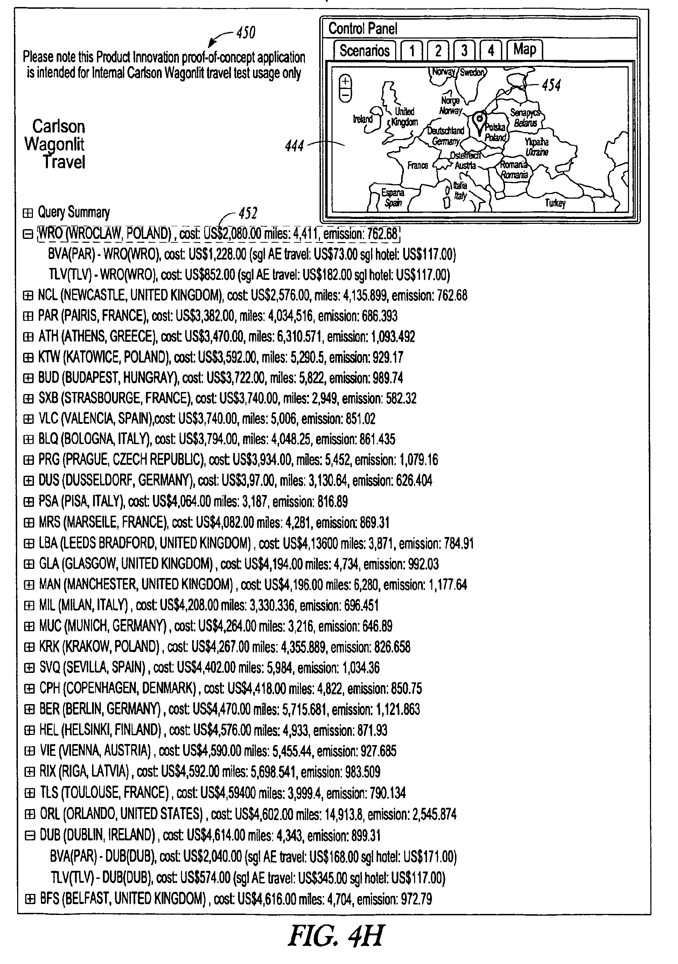

Figure 4H illustrates an example user interface screen 450 in which a scenario 452 has been expanded to include the component routes to a destination city in the scenario. Each component route includes route values such as cost, mileage and emissions values. The selected destination city is indicated as city 454 on map 444.

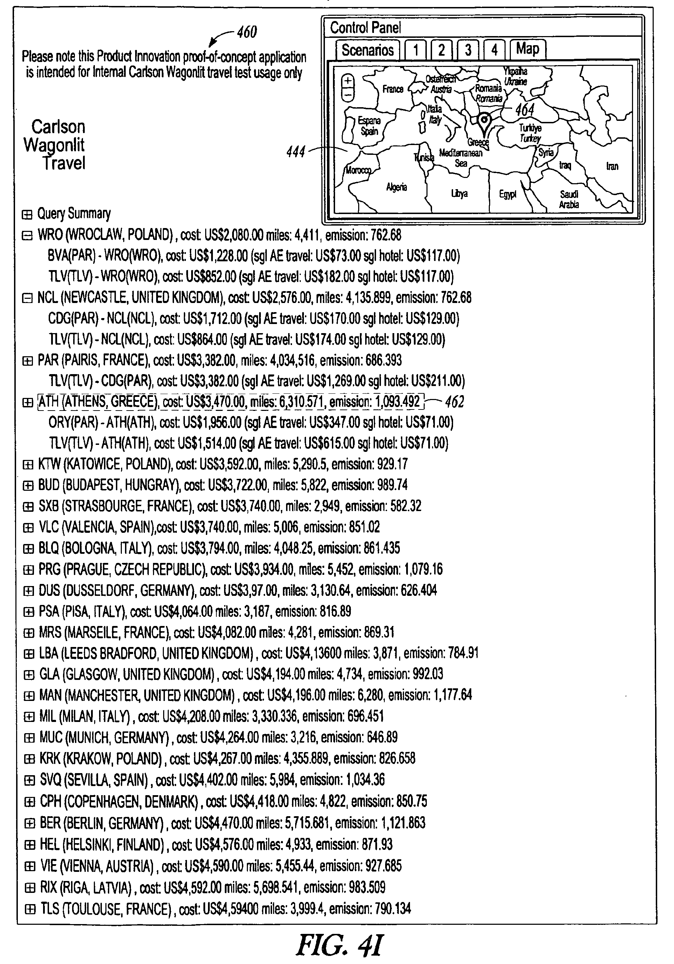

Figure 4I illustrates an example user interface screen 460 in which multiple scenarios have been expanded to show component route values. The selected scenario 462 is indicated as city 464 on map 444.

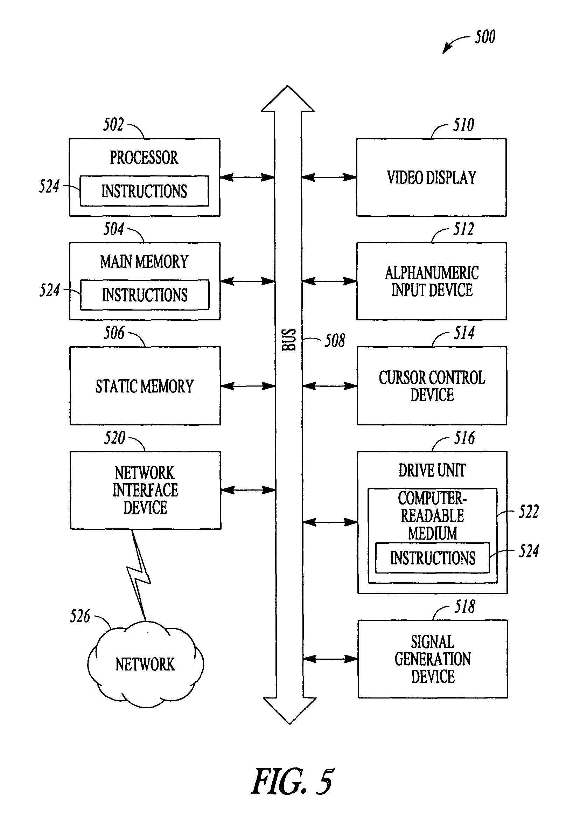

Figure 5 is a block diagram of an example embodiment of a computer system 500 upon which embodiments of the inventive subject matter can execute. The description of Figure 5 is intended to provide a brief, general description of suitable computer hardware and a suitable computing environment in conjunction with which the invention may be implemented. In some of the embodiments described herein, the invention is described in the general context of computer-executable instructions, such as program modules, being executed by a computer. Generally, program modules include routines, programs, objects, components, data structures, etc., that perform particular tasks or implement particular abstract data types.

As noted above, the system as disclosed herein can be spread across many physical hosts. Therefore, many systems and sub-systems of Figure 5 can be involved in implementing the inventive subject matter disclosed herein.

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/0 remote processing devices that are linked through a communications network. In a distributed computing environment, program modules may be located in both local and remote memory storage devices.

In the embodiment shown in Figure 5, a hardware and operating environment is provided that is applicable to both servers and/or remote clients.

With reference to Figure 5, an example embodiment extends to a machine in the example form of a computer system 500 within which instructions for causing the machine to perform any one or more of the methodologies discussed herein may be executed. In alternative example embodiments, the machine operates as a standalone device or may be connected (e.g., networked) to other machines. In a networked deployment, the machine may operate in the capacity of a server or a client machine in server-client network environment, or as a peer machine in a peer- to-peer (or distributed) network environment. Further, while only a single machine is illustrated, the term "machine" shall also be taken to include any collection of machines that individually or jointly execute a set (or multiple sets) of instructions to perform any one or more of the methodologies discussed herein.

The example computer system 500 may include a processor 502 (e.g., a central processing unit (CPU), a graphics processing unit (GPU) or both), a main memory 504 and a static memory 506, which communicate with each other via a bus 508. The computer system 500 may further include a video display unit 510 (e.g., a liquid crystal display (LCD) or a cathode ray tube (CRT)). In example embodiments, the computer system 500 also includes one or more of an alphanumeric input device 512 (e.g., a keyboard), a user interface (UI) navigation device or cursor control device 514 (e.g., a mouse), a disk drive unit 516, a signal generation device 518 (e.g., a speaker), and a network interface device 520.

The disk drive unit 516 includes a machine-readable medium 522 on which is stored one or more sets of instructions 524 and data structures (e.g., software instructions) embodying or used by any one or more of the methodologies or functions described herein. The instructions 524 may also reside, completely or at least partially, within the main memory 504 or within the processor 502 during execution thereof by the computer system 500, the main memory 504 and the processor 502 also constituting machine-readable media.

While the machine-readable medium 522 is shown in an example embodiment to be a single medium, the term "machine-readable medium" may include a single medium or multiple media (e.g., a centralized or distributed database, or associated caches and servers) that store the one or more instructions. The term "machine-readable medium" shall also be taken to include any tangible medium that is capable of storing, encoding, or carrying instructions for execution by the machine and that cause the machine to perform any one or more of the methodologies of embodiments of the present invention, or that is capable of storing, encoding, or carrying data structures used by or associated with such instructions. The term "machine-readable medium" shall accordingly be taken to include, but not be limited to, solid-state memories and optical and magnetic media that can store information in a non-transitory manner, i.e., media that is able to store information for a period of time, however brief. Specific examples of machine-readable media include non-volatile memory, including by way of example semiconductor memory devices (e.g., Erasable Programmable Read-Only Memory (EPROM), Electrically Erasable Programmable Read-Only Memory (EEPROM), and flash memory devices); magnetic disks such as internal hard disks and removable disks; magneto-optical disks; and CD-ROM and DVD-ROM disks.

The instructions 524 may further be transmitted or received over a communications network 526 using a transmission medium via the network interface device 520 and utilizing any one of a number of well-known transfer protocols (e.g., FTP, HTTP). Examples of communication networks include a local area network (LAN), a wide area network (WAN), the Internet, mobile telephone networks, Plain Old Telephone (POTS) networks, and wireless data networks (e.g., WiFi and WiMax networks). The term "transmission medium" shall be taken to include any intangible medium that is capable of storing, encoding, or carrying instructions for execution by the machine, and includes digital or analog communications signals or other intangible medium to facilitate communication of such software.

### General

In this detailed description, reference is made to specific examples by way of drawings and illustrations. These examples are described in sufficient detail to enable those skilled in the art to practice the inventive subject matter, and serve to illustrate how the inventive subject matter can be applied to various purposes or embodiments. Other embodiments are included within the inventive subject matter, as logical, mechanical, electrical, and other changes can be made to the example embodiments described herein. Features or limitations of various embodiments described herein, however essential to the example embodiments in which they are incorporated, do not limit the inventive subject matter as a whole, and any reference to the invention, its elements, operation, and application are not limiting as a whole, but serve only to define these example embodiments. This detailed description does not, therefore, limit embodiments of the invention, which are defined only by the appended claims.

Although an overview of the inventive subject matter has been described with reference to specific example embodiments, various modifications and changes may be made to these embodiments without departing from the scope of the present invention. Such embodiments of the inventive subject matter may be referred to herein, individually or collectively, by the term "invention" merely for convenience and without intending to voluntarily limit the scope of this application to any single invention or inventive concept if more than one is disclosed.

The following numbered clauses set out features of the present invention:
1. A method for execution by one or more processors, the method comprising:
   maintaining one or more databases storing a plurality of travel segments, the travel segments having an origin city, a destination city and one or more travel segment values;
   receiving search parameters including a plurality of attendee cities for a plurality of attendees, a number of attendees for each of the attendee cities, and a unit of time;
   determining travel routes from each of the attendee cities to destination cities in the one or more databases, the travel routes including one or more of the plurality of travel segments;
   determining by the one or more processors a route value for each travel route, the route value determined in accordance with the one or more travel segment values for the one or more travel segments in the travel route and a number of the plurality of attendees assigned to the travel route;
   creating a plurality of travel scenarios, each scenario including a destination city and a travel route from each attendee city to the destination city;
   determining a total value for each of the travel scenarios, the total value including the route value for each of the travel routes in the travel scenario;
   creating an ordered list of the travel scenarios; and
   presenting one or more of the travel scenarios in the ordered list.
2. The method of clause 1, wherein the ordered list includes the total value determined for the destination city in the travel scenario.
3. The method of clause 1, wherein the total value comprises a total travel cost, and wherein the ordered list is ordered according to the total travel cost for the destination cities.
4. The method of clause 3, wherein the one or more databases further includes data for telepresence facilities, the data including a telepresence cost and telepresence location for each of the facilities, and wherein the total travel cost for a travel scenario includes the telepresence cost for the telepresence facilities in the destination cities in the travel scenario.
5. The method of clause 1, wherein the one or more databases further include emissions data, wherein the total value comprises a total emissions value associated with travel to destination cities in the plurality of candidate cities, and
   wherein the ordered list is ordered according to the total emissions value.
6. The method of clause 5, wherein the ordered list is ordered according to a weighting of the total travel cost and a weighting of the emission total.
7. The method of clause 1, wherein the ordered list is ordered according to a mileage traveled.
8. The method of clause 1, wherein the ordered list is ordered according to the total travel time.
9. The method of clause 1, wherein presenting the ordered list includes displaying the ordered list.
10. The method of clause 1, wherein presenting the ordered list includes transmitting the ordered list to an application.
11. The method of clause 1, wherein the total travel costs for a destination city includes hotel costs for the destination city.
12. The method of clause 1, and further comprising applying one or more constraints, the constraints allowing the inclusion or exclusion of routes from the travel scenarios.
13. The method of clause 11, wherein the constraints are obtained from a travel policy for a travel client.

## Claims

1. A method for transporting attendees from respective attendee locations to a meeting location at least in part by motorised vehicle, the method comprising:
maintaining one or more databases (104) storing a plurality of travel segments, the travel segments having an origin, a destination and a travel segment value indicative of CO₂ emissions associated with the travel segment;
in an optimisation device (102);
receiving search parameters including a plurality of attendee locations for a plurality of attendees, a number of attendees for each of the attendee locations, and a unit of time;
determining travel routes from each of the attendee locations to a number of prospective meeting locations on the basis of travel segment data stored in the one or more databases, the travel routes each including one or more of the plurality of travel segments;
determining a route value for each travel route, the route value determined in accordance with the one or more travel segment values for the one or more travel segments in the travel route and a number of the plurality of attendees assigned to the travel route;
creating a plurality of travel scenarios, each scenario including a prospective meeting location and a travel route from each attendee city to the prospective meeting location;
determining a total value for each of the travel scenarios, the total value including the route value for each of the travel routes in the travel scenario; and
transporting the attendees from their attendee locations to the meeting
location in accordance with a travel scenario whose total value is less than the maximum of the total values of the respective travel scenarios.

2. A method according to claim 1, wherein the step of transporting the attendees from their attendee locations to the meeting location comprises:
transporting the attendees from their attendee locations to the meeting location in accordance with the travel scenario whose total value is the least of the total values of the respective travel scenarios.

3. The method of claim 1 or claim 2, further including the steps of:
creating an ordered list of the travel scenarios, on the basis of the total value determined for each travel scenario;
displaying the ordered list; and
selecting a travel scenario from the ordered list.

4. The method of any preceding claim, wherein the one or more databases (104) further includes data for telepresence facilities, the data including a telepresence cost and telepresence location for each of the facilities, and wherein the total travel cost for a travel scenario includes the telepresence cost for the telepresence facilities in the destination cities in the travel scenario.

5. The method of any preceding claim, wherein the stored travel segment values include an element representing travel cost, and wherein the total value of each travel scenario is determined according to a weighting of the total travel cost and a weighting of the emission total.

6. The method of claim 5, wherein the total travel costs for a prospective meeting location includes hotel costs for the prospective meeting location.

7. The method of any preceding claim, further comprising the steps of applying one or more constraints, the constraints allowing the inclusion or exclusion of routes from the travel scenarios.

8. The method of claim 7, wherein the constraints are determined by travel policy data associated with a travel client and stored in a travel policy database (120).

9. Apparatus for transporting a number of attendees from respective attendee locations to a meeting location at least in part by motorised vehicle, the apparatus comprising:
one or more databases storing a plurality of travel segments, the travel segments having an origin location, a destination location and a travel segment value representing a CO₂ emissions value of the said travel segment;
input means for receiving search parameters including a plurality of attendee locations for a plurality of attendees, a number of attendees for each of the attendee locations, and a unit of time;
processor means for determining travel routes from each of the attendee locations to destination locations on the basis of data stored in the one or more databases, the travel routes including one or more of the plurality of travel segments;
means for determining a route value for each travel route in accordance with the one or more travel segment values for the one or more travel segments in the travel route and a number of the plurality of attendees assigned to the travel route;
means for creating a plurality of travel scenarios, each scenario including a destination location and a travel route from each attendee location to the destination location;
means for determining a respective total value for each of the travel scenarios, the total value including the route values for the travel routes in the travel scenario; and
means for transporting the attendees in accordance with a selected travel scenario from their attendee locations to the meeting location, wherein the selected travel scenario is a travel scenario having a total value which is less than the maximum of the total values of the respective travel scenarios.

10. Apparatus according to claim 9, wherein the travel segment values include an element representing a CO₂ emissions value and an element representing a travel cost value for the travel segment;
and wherein each route value comprises a weighting of the travel cost and a weighting of the CO₂ emissions value of the segment or segments in the travel route.

11. Apparatus according to claim 9, further including:
means for creating an ordered list of the travel scenarios, on the basis of the total value determined for each travel scenario;
means for presenting the ordered list; and
means for selecting a travel scenario from the ordered list.

12. Apparatus for transporting attendees from respective attendee locations to a meeting location at least in part by motorised vehicle, the system comprising:
one or more processors;
one or more databases storing a plurality of travel routes, the travel routes having an origin, a destination and a travel cost; and
a meeting optimization module executable by the one or more processors and coupled to the one or more databases, wherein the meeting optimization module is configured to:
receive search parameters including a plurality of attendee locations for a plurality of attendees and a number of attendees for each of the attendee locations;
select travel routes from the plurality of travel routes where the origin of the travel route matches an attendee location of the plurality of attendee locations, and the destination of the travel route matches a prospective meeting location;
determine a total travel value for each prospective meeting location in the selected travel routes, the total travel value determined in accordance with the travel costs for the travel routes to the prospective meeting location from the attendee cities and a number of the plurality of attendees travelling to the prospective meeting location from the attendee cities;
create an ordered list of travel scenarios, each of the travel scenarios including a prospective meeting location, a number of travel routes and a total travel value; and
display the travel scenarios in the ordered list; and
transportation means including motorised vehicles, for transporting attendees from their respective at attendee locations to the meeting location in accordance with one of the travel scenarios.

13. Apparatus according to claim 12, further comprising:
means for selecting the said one of the travel scenarios from the ordered list.

14. A system according to claim 13, wherein the means for selecting one of the travel scenarios comprises means for:
comparing the respective total travel values of the said one or more travel scenarios; and
selecting a travel scenario whose total travel value is less than the maximum total travel value of the respective travel scenarios.

15. A system according to claim 12, claim 13 or claim 14, wherein the travel cost for each travel route includes an element representative of CO₂ emissions.
